# EUROPEAN PATENT APPLICATION

(11) **EP 4 468 443 A1**
(43) Date of publication of application: **27.11.2024**
(21) Application number: 22959945.1
(22) Date of filing: 28.09.2022
(51) Int. Cl.: H01M 10/0587

(54) **WINDING-TYPE ELECTRODE ASSEMBLY, BATTERY CELL, BATTERY, ELECTRIC APPARATUS AND WINDING DEVICE**

(71) Applicant: Contemporary Amperex Technology Co., Limited, Ningde, Fujian 352100 (CN)
(72) Inventor: LIU, Ling, Ningde, Fujian 352100 (CN); HUANG, Caixia, Ningde, Fujian 352100 (CN)
(74) Representative: Frick, Robert
(86) International application number: PCT/CN2022/122222
(87) International publication number: WO 2024/065301

(57) **Abstract**

The present application relates to the technical field of batteries, and provides a wound electrode assembly, a battery cell, a battery, a power consuming device, and a winding apparatus. The wound electrode assembly includes: an electrode plate; and a separator attached to the electrode plate and located in a bent region of the electrode plate, the separator losing viscosity between the separator and the electrode plate within a preset time. With the solution of the present application, the performance of the battery can be improved.

## Description

### Technical Field

The present application relates to the technical field of technical batteries, and in particular, to a wound electrode assembly, a battery cell, a battery, a power consuming device, and a winding apparatus.

### Background Art

With the development of battery technologies, there are increasing requirements on all aspects of batteries. For example, while performance parameters such as energy density, cycling life, discharge capacity and charge-discharge rate are considered, the safety of the batteries also needs to be taken into account. The precipitation of metal ions in the batteries, such as lithium precipitation, is one of the main factors affecting the electrical performance and safety performance of the batteries. Once the lithium precipitation occurs, not only will the electrical performance of the battery be reduced, but also it is likely to form dendrites with the accumulation of precipitated lithium. The dendrites may puncture a separation film to cause a short circuit in the battery, resulting in a safety hazard.

Therefore, how to provide a battery assembly in order to improve the performance of a battery is a technical problem that needs to be urgently solved.

### Summary of the Invention

The present application provides a wound electrode assembly, a battery cell, a battery, a power consuming device and a winding apparatus, which can improve the safety performance of the battery.

In a first aspect, the present application provides a wound electrode assembly, including: an electrode plate; and a separator attached to the electrode plate and located in a bent region of the electrode plate, the separator losing viscosity between the separator and the electrode plate within a preset time.

In an embodiment of the present application, the wound electrode assembly includes the electrode plate and the separator. The separator is attached to the electrode plate and located in the bent region of the electrode plate, such that the phenomenon can be avoided or reduced that deintercalated ions of a positive electrode plate are intercalated into a negative electrode plate through the separator, thereby avoiding various phenomena such as lithium precipitation caused by the lack of vacancies in the negative electrode plate. The separator loses the viscosity between the separator and the electrode plate within the preset time, thereby avoiding wrinkling of the electrode plate during subsequent reshaping and other processes due to the viscosity between the separator and the electrode plate. Therefore, the performance of the battery can be improved with the technical solution of the present application.

In a possible implementation, the bent region of the electrode plate includes a first surface and a second surface that are oppositely arranged, and the separator is attached to the first surface and/or the second surface of the bent region of the electrode plate. In this way, it is convenient to flexibly set a position of the separator according to actual needs, and it is beneficial to taking into account the thickness of the electrode assembly and an isolation effect of the separator.

In a possible implementation, the electrode plate includes a positive electrode plate, and the separator is attached to the first surface and/or the second surface of the bent region of the positive electrode plate. In the wound electrode assembly, with regard to the positive electrode plate and the negative electrode plate at a position where the two electrode plates have the same number of turns, the negative electrode plate is closer to the center of the electrode assembly than the positive electrode plate. Therefore, in the bent region, the positive electrode plate has a greater area than the negative electrode plate, resulting in that the number of ions deintercalated from the positive electrode plate is greater than the number of vacancies for accommodating ions in the negative electrode plate. By arranging the separator on the first surface and/or the second surface of the bent region of the positive electrode plate, the ions can be prevented from passing through the separator, thereby avoiding the occurrence of phenomena such as lithium precipitation.

In a possible implementation, the electrode assembly includes N turns of positive electrode plate, and the separator is arranged at the bent region of 1 to 5 turns of the positive electrode plate close to the center of the electrode assembly, where N ≥ 5. The farther away from the center of the electrode assembly, the smaller an area difference between the positive electrode plate and the negative electrode plate at the bent region, and the less prone to causing lithium precipitation at the bent region of the negative electrode plate. Therefore, by arranging the separator at the bent region of 1 to 5 turns of the positive electrode plate close to the center of the electrode assembly, the lithium precipitation can be avoided, the thickness of the electrode assembly can also be decreased, and the size of the electrode assembly can thus be decreased, which is beneficial to increasing the volumetric energy density of the battery.

In a possible implementation, the electrode assembly further includes a separation film, and the separation film is located between the positive electrode plate and the negative electrode plate to isolate the positive electrode plate from the negative electrode plate; and the separator is connected to the separation film. That is to say, the separator is located between the separation film and the electrode plate. At a position where the separator is not arranged, ions can move between the positive electrode plate and the negative electrode plate through the separation film, thereby implementing a normal operation of the electrode assembly or the battery.

In a possible implementation, the separator is configured to prevent ions deintercalated from the positive electrode plate from passing through the separator. In this way, the phenomena such as lithium precipitation at the bent region of the negative electrode plate can be avoided, and thus the safety of the battery can be improved.

In a possible implementation, the separator loses the viscosity within the preset time after being irradiated with light of a preset wavelength band. In this way, the separator can lose the viscosity within the preset time by means of irradiation with the light of a preset wavelength band.

In a possible implementation, the separator includes a base and a time-delay adhesive applied to the base, the time-delay adhesive is located between the base and the electrode plate, and the time-delay adhesive loses the viscosity within the preset time after being irradiated with light of a preset wavelength band, such that the separator loses the viscosity between the separator and the electrode plate within the preset time. In this way, the separator can lose the viscosity within the preset time by using the time-delay adhesive, which is easy to implement.

In a possible implementation, a material of the base is at least one of a fiber, a polymer, polypropylene, polyethylene, rubber, and a non-woven fabric. The material is available, so the separator is convenient to prepare.

In a possible implementation, the time-delay adhesive is an ultraviolet time-delay adhesive or an infrared time-delay adhesive. The adhesive is available, so the separator is convenient to prepare.

In a possible implementation, the separator has a thickness of 3 µm-2 cm. In this way, both the performance of the separator and the size of the electrode assembly can be taken into account.

In a second aspect, the present application provides a battery cell, including a housing and the wound electrode assembly in the first aspect and in any possible implementation thereof, the housing being configured to accommodate the electrode assembly.

In a third aspect, the present application provides a battery, including a case and the battery cell in the second aspect, the case being configured to accommodate the battery cell.

In a fourth aspect, the present application provides a power consuming device, including the battery in the third aspect, the battery being configured to supply power to the power consuming device.

In a fifth aspect, the present application provides a winding apparatus for preparing a wound electrode assembly. The winding apparatus includes: a first conveying shaft for conveying an electrode plate, a separator being attached to the electrode plate; and an irradiation device for irradiating the separator attached to the electrode plate, such that the separator loses the viscosity between the separator and the electrode plate within a preset time. In this way, the separator is irradiated by the irradiation device, and the separator loses the viscosity between the separator and the electrode plate within the preset time, so that the electrode plate can be prevented from wrinkling due to the viscosity in a subsequent reshaping process.

In a possible implementation, the irradiation device is arranged inside the first conveying shaft, and is configured to irradiate the separator when the first conveying shaft conveys the electrode plate. In this way, the irradiation device is arranged in the first conveying shaft, so that a space occupied by the irradiation device can be saved on.

In a possible implementation, the first conveying shaft includes: a first half shaft, the irradiation device being arranged inside the first half shaft; and a second half shaft connected to the first half shaft, the second half shaft being provided with a light-transmitting region arranged corresponding to the irradiation device, such that light from the irradiation device is emitted through the light-transmitting region. In this way, the light emitted by the irradiation device located in the first conveying shaft can be emitted through the light-transmitting region, thereby ensuring that the separator can be irradiated by the irradiation device.

In a possible implementation, the first half shaft and the second half shaft are provided with snap-fit structures, and the first half shaft and the second half shaft are snap-fitted by means of the snap-fit structures. In this way, the connection between the first half shaft and the second half shaft is achieved while the conveying of the electrode plates by the first conveying shaft is not affected.

In a possible implementation, a shaft wall of the first half shaft and/or the second half shaft has a thickness of 0.5 cm to 18 cm. In this way, both the strength and the size of the first half shaft and the second half shaft can be taken into account.

In a possible implementation, the winding apparatus further includes a control unit and a distance measurement mechanism; the distance measurement mechanism is configured to measure a first length, and the first length is a length by which the electrode plate passes through the first conveying shaft; and the control unit is configured to control the irradiation device to be turned on or off according to the first length. In this way, it is convenient to detect the separator in a timely manner and irradiate the separator.

In a possible implementation, the winding apparatus further includes a color sensing mechanism for sensing the color of the separator or the electrode plate; and the control unit is configured to control the irradiation device to be turned on or off according to the color sensed by the color sensing mechanism. In this way, it is possible to detect the separator in a timely manner and irradiate the separator.

In a possible implementation, the control unit, the color sensing mechanism and the distance measurement mechanism are arranged in the irradiation device. In this way, the space occupied by the winding apparatus can be saved on, and the irradiation device can also be convenient to prepare.

In a possible implementation, the separator is attached to the surface of the positive electrode plate, and the first conveying shaft is configured to convey the positive electrode plate. In this way, after the positive electrode plate, the separation film and the negative electrode plate are wound to form the electrode assembly, the lithium precipitation can be avoided or reduced by arranging the separator.

In a possible implementation, the separator includes a base and a time-delay adhesive applied to the base, the time-delay adhesive is located between the base and the electrode plate, and the time-delay adhesive loses the viscosity within the preset time after being irradiated by the irradiation device, such that the separator loses the viscosity between the separator and the electrode plate within the preset time. In this way, the separator can lose the viscosity within the preset time by using the time-delay adhesive and the corresponding irradiation device, which is easy to implement.

In a possible implementation, the irradiation device is an ultraviolet lamp irradiation device or an infrared lamp irradiation device. In this way, the irradiation device is easily obtained.

In a possible implementation, the first conveying shaft has a diameter of 1.5 cm-20 cm. In this way, the first conveying shaft is convenient to machine, and meanwhile, it is also convenient for the first conveying shaft to convey the electrode plate.

In a possible implementation, the separator has a thickness of 3 µm-2 cm. In this way, both the performance of the separator and the size of the electrode assembly can be taken into account.

In an embodiment of the present application, the wound electrode assembly includes the electrode plate and the separator. The separator is attached to the electrode plate and located in the bent region of the electrode plate, such that the phenomenon can be avoided or reduced that deintercalated ions of a positive electrode plate are intercalated into a negative electrode plate through the separator, thereby avoiding various phenomena such as lithium precipitation caused by the lack of vacancies in the negative electrode plate. The separator loses the viscosity between the separator and the electrode plate within the preset time, thereby avoiding wrinkling of the electrode plate during subsequent reshaping and other processes due to the viscosity between the separator and the electrode plate. Therefore, the performance of the battery can be improved with the technical solution of the present application.

### Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic diagram of an electrode assembly according to an embodiment of the present application;
FIG. 2 is a top view of the electrode assembly in FIG. 1;
FIG. 3 is a front view of the electrode assembly in FIG. 1;
FIG. 4 is a side view of the electrode assembly in FIG. 1;
FIG. 5 is a schematic diagram of an electrode assembly according to an embodiment of the present application;
FIG. 6 is a schematic diagram of an electrode assembly according to an embodiment of the present application;
FIG. 7 is a schematic diagram of an electrode assembly according to an embodiment of the present application;
FIG. 8 is a schematic diagram of an electrode plate attached with a separator according to an embodiment of the present application;
FIG. 9 is a schematic diagram of an electrode plate attached with a separator according to an embodiment of the present application;
FIG. 10 is a schematic diagram of a battery cell according to an embodiment of the present application;
FIG. 11 is a schematic diagram of a battery according to an embodiment of the present application;
FIG. 12 is a schematic diagram of a power consuming device according to an embodiment of the present application;
FIG. 13 is a schematic diagram of a winding apparatus according to an embodiment of the present application;
FIG. 14 is a schematic diagram of a winding apparatus according to an embodiment of the present application; and
FIG. 15 is a schematic diagram of a winding apparatus in use according to an embodiment of the present application.

In the accompanying drawings, the figures are not drawn to scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the accompanying drawings, and do not limit the specific structure in the present application. In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the present application, a battery cell may include a lithium ion secondary battery, a lithium ion primary battery, a lithium-sulfur battery, a sodium-lithium ion battery, a sodium ion battery or a magnesium ion battery, etc., which is not limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which is also not limited in the embodiment of the present application.

A battery mentioned in embodiments of the present application refers to a single physical module including one or more battery cells to provide a higher voltage and capacity. For example, the battery mentioned in the present application may include a battery pack, etc. The battery generally includes a case for packaging one or more battery cells. The case can prevent liquid or other foreign matters from affecting charging or discharging of the battery cell(s).

The battery cell includes an electrode assembly and an electrolyte solution. The electrode assembly is composed of a positive electrode plate, a negative electrode plate, and a separation film. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive electrode tab. Taking a lithium ion battery as an example, the positive electrode current collector may be made of aluminum, and the positive electrode active material may be lithium cobalt oxide, lithium iron phosphate, ternary lithium, lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative electrode tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. A material of the separation film may be Polypropylene (PP) or Polyethylene (PE), etc.

The battery may include a plurality of battery cells in order to meet different power demands, with the plurality of battery cells being in series connection, parallel connection or series-parallel connection. The series-parallel connection refers to a combination of series connection and parallel connection. Optionally, the plurality of battery cells may be in series connection or in parallel connection or in series-parallel connection to constitute a battery module, and then a plurality of battery modules may be in series connection or in parallel connection or in series-parallel connection to constitute the battery. That is to say, the plurality of battery cells may directly form a battery, or may form battery modules that may then form a battery. The battery is further arranged in a power consuming device to supply electric energy to the power consuming device.

Design factors on many aspects need to be simultaneously considered for the development of the battery technology, such as energy density, cycling life, discharge capacity, charge-discharge rate, and other performance parameters. In addition, the safety of the battery needs to be taken into account. The precipitation of metal ions in the batteries, such as lithium precipitation, is one of the main factors affecting the electrical performance and safety performance of the batteries. Once the lithium precipitation occurs, not only will the electrical performance of the battery be reduced, but also it is likely to form dendrites with the accumulation of precipitated lithium. The dendrites may puncture a separation film to cause a short circuit in the battery, resulting in a safety hazard.

The applicant found that in a wound electrode assembly, the curvature of the electrode plate is relatively large at a bent region of an electrode plate close to the center of the electrode assembly, and lithium precipitation and active material shedding are prone to occurring at the bent region of the electrode plate. In addition, during the reshaping of the electrode assembly, a gap between a positive electrode plate and a negative electrode plate becomes larger at the bent region, which will further aggravate the lithium precipitation and the formation of lithium dendrites. The above factors are not conducive to improving the performance of a battery.

In view of this, the present application provides a wound electrode assembly, including: an electrode plate; and a separator attached to the electrode plate and located in a bent region of the electrode plate, the separator losing viscosity between the separator and the electrode plate within a preset time. In this way, the phenomenon can be avoided or reduced that deintercalated ions of a positive electrode plate are intercalated into a negative electrode plate through the separator, thereby avoiding various phenomena such as lithium precipitation caused by the lack of vacancies in the negative electrode plate. The separator loses the viscosity between the separator and the electrode plate within the preset time, thereby avoiding wrinkling of the electrode plate during subsequent reshaping and other processes due to the viscosity between the separator and the electrode plate. Therefore, the performance of the battery can be improved with the technical solution of the present application.

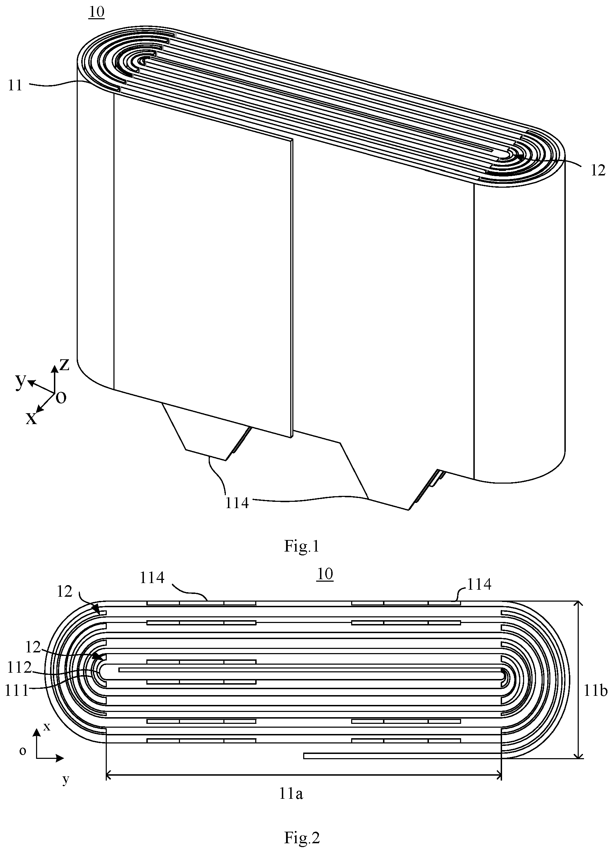

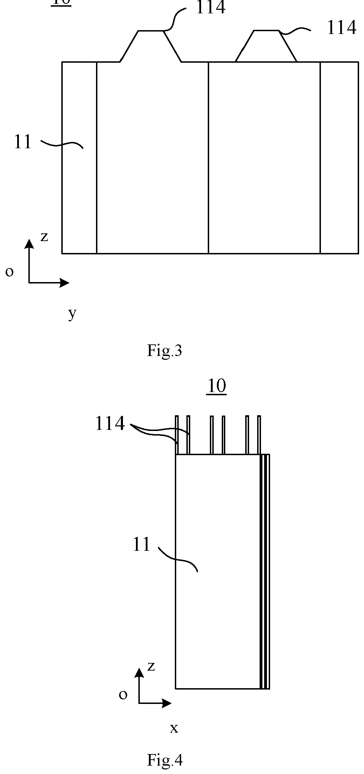

FIG. 1 is a schematic diagram of an electrode assembly according to an embodiment of the present application, FIG. 2 is a top view of the electrode assembly in FIG. 1, FIG. 3 is a front view of the electrode assembly in FIG. 1, and FIG. 4 is a side view of the electrode assembly in FIG. 1. As shown in FIGS. 1 to 4, the embodiment of the present application provides a wound electrode assembly 10, and the electrode assembly 10 includes an electrode plate 11 and a separator 12.

The electrode plate 11 includes a positive electrode plate 111 and a negative electrode plate 112.

The separator 12 is attached to the electrode plate 11 and located at a bent region 11b of the electrode plate 11, wherein the separator 12 can be attached to the positive electrode plate 111 or the negative electrode plate 112.

The bent region 11b refers to a position where the electrode plate 11 is bent during winding. For example, the electrode plate 11 includes a flat region 11a and a bent region 11b, the electrode plate 11 is not bent in the flat region 11a, and the electrode plate 11 extends in the flat region 11a in a first direction, such as a y direction; and an extension direction of the electrode plate 11 changes at two ends of the first direction, that is, the electrode plate 11 is bent at the bent region 11b.

It should be noted that the separator 12 is located in the bent region 11b of the electrode plate 11, and the separator 12 may completely cover the electrode plate 11 in the bent region 11b, or partially cover the electrode plate 11 in the bent region 11b.

The electrode plate 11 in the bent region 11b may be semicircular, elliptical or may be approximately semicircular or elliptical.

The separator 12 loses the viscosity between the separator and the electrode plate 11 within a preset time. The preset time is related to the properties of the separator 12 itself, and the preset time may also be specifically set according to actual needs.

In the process of preparing the wound electrode assembly 10, after the separator 12 is attached to the electrode plate 11 by means of an adhesive application mechanism, the separation film, the positive electrode plate 111 and the negative electrode plate 112 are wound into an approximately elliptical roll by a winding mechanism, and the roll is then reshaped by a reshaping mechanism, thereby completing the preparation of the wound electrode assembly 10. The preset time may be a period of time from the attachment of the separator 12 to the electrode plate 11 to the completion of roll preparation (before roll reshaping).

Before the electrode plate 11 and the separation film are wound by the winding mechanism, there is viscosity between the separator 12 and the electrode plate 11, such that the separator 12 is fixed at a corresponding position of the electrode plate 11; and after the electrode plate 11 and the separation film are wound by the winding mechanism, the separator 12 loses the viscosity between the separator and the electrode plate 11. By means of the winding by the winding mechanism, the separator 12 is already fixed in place, that is, at the bent region 11b between the positive electrode plate 111 and the negative electrode plate 112. In this case, the separator 12 loses the viscosity between the separator and the electrode plate 11, and the separator 12 also does not fall off from the electrode plate 11.

Optionally, the preset time may also be a period of time from the attachment of the separator 12 to the electrode plate 11 to the completion of roll reshaping.

The separator 12 loses the viscosity between the separator and the electrode plate 11 within the preset time, so that the influence of the viscosity on the electrode plate 11 can be avoided. For example, it is possible to avoid wrinkling of the electrode plate 11 caused by reshaping or stress unevenness of the electrode plate due to the viscosity. For another example, it is possible to avoid side reactions between the viscous separator 12 and an electrolyte solution in the battery. For another example, it is possible to prevent the viscous separator 12 from adsorbing ions, sodium ions or lithium ions, etc. to a position between the separator 12 and the electrode plate 11 to which the separator 12 is attached. This is beneficial to prolonging the service life of the battery, increasing the energy density of the battery, etc.

Optionally, the electrode assembly 10 further includes a tab 114, and the tab 114 may be connected to a housing for accommodating the electrode assembly 10.

In an embodiment of the present application, the wound electrode assembly 10 includes the electrode plate 11 and the separator 12. The separator 12 is attached to the electrode plate 11 and located in the bent region 11b of the electrode plate 11, such that the phenomenon can be avoided or reduced that deintercalated ions of the positive electrode plate 111 are intercalated into the negative electrode plate 112 through the separator 12, thereby avoiding various phenomena such as the lithium and sodium precipitation caused by the lack of vacancies in the negative electrode plate 112. The separator 12 loses the viscosity between the separator and the electrode plate 11 within the preset time, thereby avoiding wrinkling of the electrode plate 11 during subsequent reshaping and other processes due to the viscosity between the separator 12 and the electrode plate 11. Therefore, the performance of the battery can be improved with the technical solution of the present application.

In an embodiment of the present application, the bent region 11b of the electrode plate 11 includes a first surface 1111 and a second surface 1112 that are oppositely arranged, and the separator 12 is attached to the first surface 1111 and/or the second surface 1112 of the bent region 11b of the electrode plate 11.

The first surface 1111 and the second surface 1112 are oppositely arranged in a thickness direction of the electrode plate 11. With regard to the positive electrode plate 111, the first surface 1111 and the second surface 1112 of the positive electrode plate 111 respectively face the negative electrode plate 112 adjacent to the positive electrode plate 111, and with regard to the negative electrode plate 112, the first surface 1111 and the second surface 1112 of the negative electrode plate 112 respectively face the positive electrode plate 111 adjacent to the negative electrode plate 112.

The separator 12 may be attached to only the first surface 1111 of the bent region 11b of the electrode plate 11, may be attached to only the second surface of the bent region 11b of the electrode plate 11, or may be attached to both the first surface 1111 and the second surface 1112 of the bent region 11b of the electrode plate 11. In this way, it is convenient to select the attachment positions and number of the separators 12 according to actual needs, so as to obtain an electrode assembly 10 having a corresponding thickness according to the actual needs and to achieve a corresponding isolation effect.

In an embodiment of the present application, the electrode plate 11 includes the positive electrode plate 111, and the separator 12 is attached to the first surface 1111 and/or the second surface 1112 of the bent region 11b of the positive electrode plate 111.

In the wound electrode assembly 10, with regard to the positive electrode plate 111 and the negative electrode plate 112 at a position where the two electrode plates have the same number of turns, the negative electrode plate 112 is closer to the center of the electrode assembly 10 than the positive electrode plate 111. For example, the first turn of positive electrode plate 111 is farther away from the center of the electrode assembly 10 than the first turn of negative electrode plate 112, in other words, the perimeter of the first turn of positive electrode plate 111 is greater than the perimeter of the first turn of negative electrode plate 112.

The first surface 1111 of the bent region 11b of the positive electrode plate 111 may be a convex surface of the positive electrode plate 111, and with regard to the positive electrode plate 111 and the negative electrode plate 112 at the position where the two electrode plates have the same number of turns, the convex surface may be a surface of the positive electrode plate 111 away from the negative electrode plate 112.

The second surface 1112 of the bent region 11b of the positive electrode plate 111 may be a concave surface of the positive electrode plate 111, and with regard to the positive electrode plate 111 and the negative electrode plate 112 at the position where the two electrode plates have the same number of turns, the concave surface may be a surface of the positive electrode plate 111 facing the negative electrode plate 112.

At the bent region 11b, with regard to the positive electrode plate 111 and the negative electrode plate 112 at the position where the two electrode plates have the same number of turns, the positive electrode plate 111 has a greater area than the negative electrode plate 112, resulting in that the number of the ions deintercalated from the positive electrode plate 111 is greater than the number of vacancies for accommodating ions in the negative electrode plate 112. By arranging the separator 12 at the bent region 11b of the positive electrode plate 111, ions can be prevented from being intercalated into the negative electrode plate 112 through the separator 12, thereby avoiding various phenomena such as lithium and sodium precipitation.

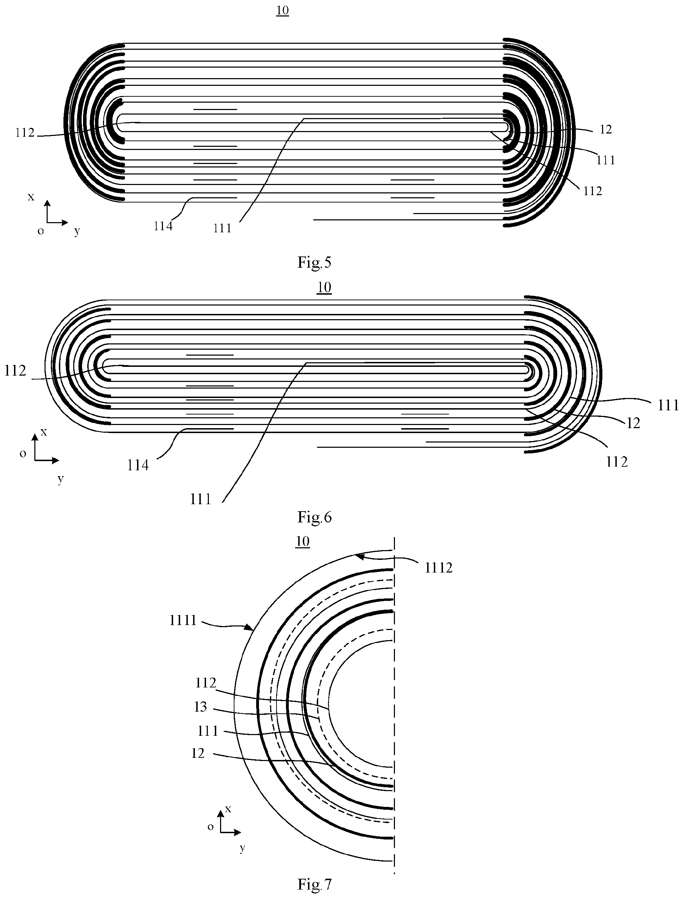

FIG. 5 is a schematic diagram of an electrode assembly according to an embodiment of the present application. As shown in FIG. 5, the separator 12 is attached to the convex surface and the concave surface of the bent region 11b of the positive electrode plate 111. By providing the separator 12 on the convex surface and the concave surface at the bent region 11b of the positive electrode plate 111, it is possible to more fully prevent the ions from passing through the separator 12.

FIG. 6 is a schematic diagram of an electrode assembly according to an embodiment of the present application. As shown in FIG. 6, the separator 12 is attached to the concave surface of the bent region 11b of the positive electrode plate 111. By arranging the separator 12 on the concave surface of the bent region 11b of the positive electrode plate 111, lithium or sodium precipitation can be avoided in the bent region 11b of the negative electrode plate 112, and meanwhile, it is beneficial to decreasing the overall thickness and size of the electrode assembly 10.

Optionally, while the separator 12 is attached to the concave surface of the bent region 11b of the positive electrode plate 111, the separator may also be attached to the convex surface of the bent region 11b of the negative electrode plate 111. That is to say, the separator 12 may be attached to the positive electrode plate 111, or may be attached to both the positive electrode plate 111 and the negative electrode plate 112, for example, by means of adhesion.

Optionally, the separator 12 is arranged on the convex surface and the concave surface of the bent region 11b of the negative electrode plate 112, that is, the two surfaces of the negative electrode plate 112 are each provided with the separator 12 at the bent region 11b.

In an embodiment of the present application, the electrode assembly 10 includes N turns of positive electrode plate 111, and the separator 12 is arranged at the bent region 11b of 1 to 5 turns of the positive electrode plate 111 close to the center of the electrode assembly 10, wherein N ≥ 5.

The farther away from the center of the electrode assembly 10, the smaller an area difference between the positive electrode plate 111 and the negative electrode plate 112 at the bent region 11b, and the less prone to causing lithium precipitation at the bent region 11b of the negative electrode plate 112. Therefore, by arranging the separator 12 at the bent region 11b of 1 to 5 turns of the positive electrode plate 111 close to the center of the electrode assembly 10, the lithium precipitation can be avoided, the thickness of the electrode assembly 10 can also be decreased, and the size of the electrode assembly 10 can thus be decreased, which is beneficial to increasing the volumetric energy density of the battery.

In the electrode assembly 10, the number of turns of the positive electrode plate 111 and the negative electrode plate 112 may be specifically set according to actual needs, for example, 20-100 turns.

FIG. 7 is a schematic diagram of an electrode assembly according to an embodiment of the present application. In an embodiment of the present application, as shown in FIG. 7, the electrode assembly 10 further includes a separation film 13, and the separation film 13 is located between the positive electrode plate 111 and the negative electrode plate 112 to isolate the positive electrode plate 111 from the negative electrode plate 112; and the separator 12 is connected to the separation film 13.

The separation film 13 is provided with gaps, and ions (such as lithium ions and sodium ions) can move between the positive electrode plate 111 and the negative electrode plate 112 through the separation film 13, thereby implementing a normal operation of the electrode assembly 10 or the battery.

The separator 12 is connected to the separation film 13, and the separator 12 may be located between the separation film 13 and the electrode plate 11. By arranging the separator 12, the ions can be prevented from passing through the separator 12 from the positive electrode plate 111, and thus the ions does not pass through the separation film 13 corresponding to the separator 12.

At a non-bent region 11b or the flat region 11a of the electrode plate 11, the ions can escape from the positive electrode plate 111, and are intercalated into the negative electrode plate 112 after passing through the separation film 13.

In an embodiment of the present application, the separator 12 is configured to prevent the ions deintercalated from the positive electrode plate 111 from passing through the separator 12. In this way, the phenomena such as lithium and sodium precipitation at the bent region 11b of the negative electrode plate 112 can be avoided, and thus the safety of the battery can be improved.

In an embodiment of the present application, the separator 12 loses its viscosity within a preset time after being irradiated by light of a preset wavelength band. In this way, the separator 12 can lose the viscosity within the preset time by means of irradiation with the light of the preset wavelength band.

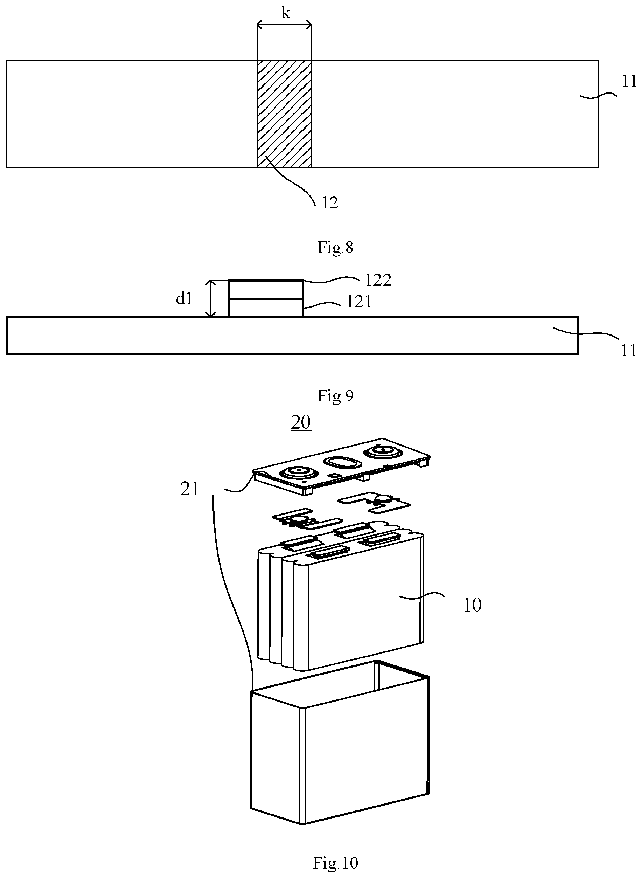

FIG. 8 is a schematic diagram of an electrode plate attached with a separator according to an embodiment of the present application, and FIG. 9 is a schematic diagram of an electrode plate attached with a separator according to an embodiment of the present application. In an embodiment of the present application, as shown in FIGS. 8 and 9, the separator 12 includes a base 121 and a time-delay adhesive 122 applied to the base, wherein the time-delay adhesive 122 is located between the base 121 and the electrode plate 11, and the time-delay adhesive 122 loses the viscosity within the preset time after being irradiated by the light of a preset wavelength band, such that the separator 12 loses the viscosity between the separator and the electrode plate 11 within the preset time. In this way, the separator can lose the viscosity within the preset time by using the time-delay adhesive, which is easy to implement.

In an embodiment of the present application, a material of the base 121 is at least one of a fiber, a polymer, polypropylene, polyethylene, rubber, and a non-woven fabric. The material is available, so the separator 12 is convenient to prepare.

For example, the material of the base 121 may be polyester, Teflon, etc.

Optionally, the base 121 is a base of a non-porous structure, such that the ions such as lithium ions cannot enter and pass through the base 121.

Optionally, the base 121 may also be a base with a certain microporous structure as long as the ions such as the lithium ions can be prevented from passing through the base.

In an embodiment of the present application, the time-delay adhesive 122 is an ultraviolet time-delay adhesive or an infrared time-delay adhesive. The adhesive is available, so the separator 12 is convenient to prepare.

Optionally, after the time-delay adhesive 122 is cured, that is, after being irradiated with ultraviolet light or infrared light, the time-delay adhesive can prevent the ions such as the lithium ions from passing through.

In an embodiment of the present application, the separator 12 has a thickness d1 of 3 µm-2 cm. For example, the thickness of the separator 12 may be 3 µm, 100 µm, 0.2 cm, 1 cm, 2 cm, etc.

By setting the thickness d1 of the separator 12 to be 3 µm-2 cm, it is possible to prevent a preparation process from being complex due to a too small thickness of the separator 12, and it is also possible to avoid an excessive thickness of the electrode assembly 10 caused by an excessive thickness of the separator 12. In addition, the separator 12 having an appropriate thickness can also ensure the isolation performance of the separator 12.

Optionally, the separator 12 has a width k of 0.1 cm-20 cm, and the width of the separator 12 is a dimension in a bending direction of the electrode plate 11. The width of the separator 12 may be set according to a specific need as well as the dimension of the bent region 11b of the electrode plate 11. For example, the width of the separator 12 may be 0.1 cm, 1 cm, 5 cm, 10 cm, 15 cm, 20 cm, etc.

FIG. 10 is a schematic diagram of a battery cell according to an embodiment of the present application. As shown in FIG. 10, the present application provides a battery cell 20, including the wound electrode assembly 10 and a housing 21 described above, the housing 21 being configured to accommodate the electrode assembly 10.

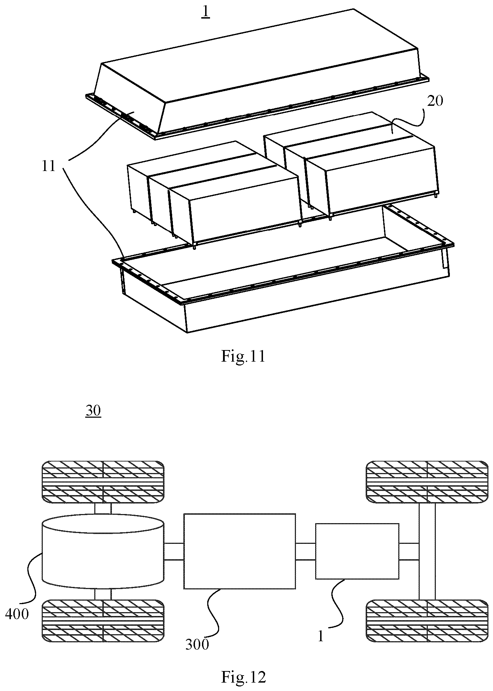

FIG. 11 is a schematic diagram of a battery according to an embodiment of the present application. As shown in FIG. 11, the present application provides a battery 1, including the battery cell 20 and a case 11 described above, the case 11 being configured to accommodate the battery cell 20.

FIG. 12 is a schematic diagram of a power consuming device according to an embodiment of the present application. As shown in FIG. 12, the present application provides a power consuming device 30, including the battery 1 described above, the battery 1 being configured to supply power to the power consuming device 30. The power consuming device 30 may be a vehicle, which may be a fuel vehicle, a gas vehicle, or a new energy vehicle. The new energy vehicle may be a battery electric vehicle, a hybrid electric vehicle, or an extended-range vehicle, etc. The vehicle may be internally provided with a motor 400, a controller 300 and a battery 1. The controller 300 is configured to control the battery 1 to supply power to the motor 400. For example, the battery 1 may be arranged at the bottom or the head or the tail of the vehicle. The battery 1 may be configured to supply power to the vehicle. For example, the battery 10 can serve as a power source for operating the vehicle for use in a circuit system of the vehicle, for example, to meet the working power demand of the vehicle during startup, navigation and traveling. In another embodiment of the present application, the battery 1 can not only serve as a power source for operating the vehicle, but also serve as a power source for driving the vehicle, instead of or partially instead of fuel or natural gas, to provide driving power for the vehicle.

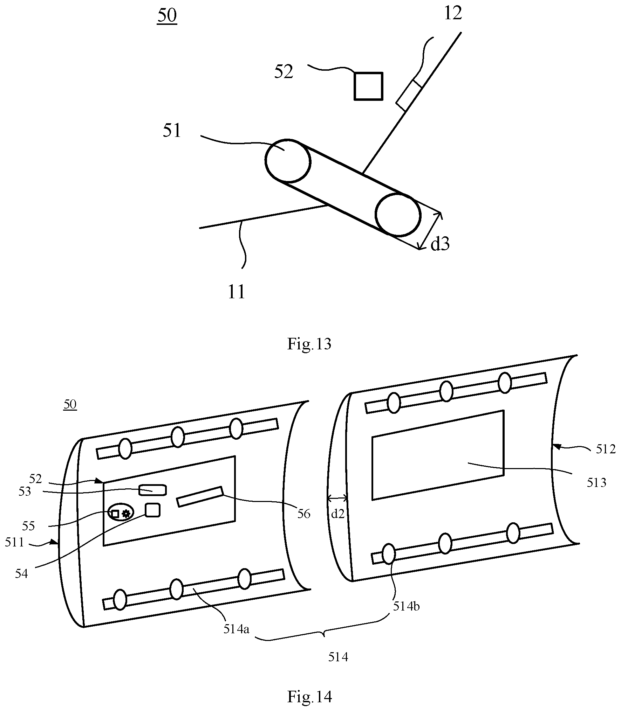

FIG. 13 is a schematic diagram of a winding apparatus according to an embodiment of the present application. As shown in FIG. 13, the present application provides a winding apparatus 50 for preparing a wound electrode assembly 10. The winding apparatus 50 includes a first conveying shaft 51 and an irradiation device 52.

The first conveying shaft 51 is configured to convey the electrode plate 11, and the electrode plate 11 is attached with the separator 12.

The first conveying shaft 51 may convey the positive electrode plate 111 or the negative electrode plate 112. The length of the first conveying shaft 51 may be specifically set according to the size of the electrode plate 11, which is not specifically limited by the present application.

The irradiation device 52 is configured to irradiate the separator 12 attached to the electrode plate 11, such that the separator 12 loses the viscosity between the separator and the electrode plate 11 within a preset time.

In an embodiment of the present application, the separator 12 is irradiated by the irradiation device 52, and the separator 12 loses the viscosity between the separator and the electrode plate 11 within the preset time, such that the electrode plate 11 can be prevented from wrinkling due to the viscosity in a subsequent reshaping process, which is beneficial to improving the performance of the electrode assembly 10 and the battery.

FIG. 14 is a schematic diagram of a winding apparatus according to an embodiment of the present application. In an embodiment of the present application, as shown in FIG. 14, the irradiation device 52 is arranged inside the first conveying shaft 51 and configured to irradiate the separator 12 when the first conveying shaft 51 conveys the electrode plate 11. In this way, the irradiation device 52 is arranged in the first conveying shaft 51, so that a space occupied by the irradiation device 52 can be saved on.

In an embodiment of the present application, the first conveying shaft 51 includes a first half shaft 511 and a second half shaft 512.

The irradiation device 52 is arranged in the first half shaft 511. That is to say, the first half shaft 511 is internally provided with a hollow structure for accommodating the irradiation device 511.

Optionally, the irradiation device 52 may be arranged on a rotatable fixing shaft, the fixing shaft is arranged inside the first conveying shaft 51, and the first conveying shaft 51 is driven to rotate by the fixing shaft so as to convey the electrode plate 11.

Optionally, the irradiation device 52 is connected to the first half shaft 511 by means of a snap-fit structure. For example, the irradiation device 52 is provided with a catch, and the first half shaft 511 is provided with a slot corresponding to the catch, and the irradiation device 52 is connected to the first half shaft 511 by means of the fitting between the catch and the slot.

Optionally, the irradiation device 52 may also be connected to the first half shaft 511 by a built-in bolt or by means of adhesion.

The second half shaft 512 is connected to the first half shaft 511, the second half shaft 512 is provided with a light-transmitting region 513, and the light-transmitting region 513 is arranged corresponding to the irradiation device 52, such that light from the irradiation device 52 is emitted through the light-transmitting region 513.

The light-transmitting region 513 may be made of a high polymer, an acrylic plate, organic glass and other materials.

Optionally, the second half shaft 512 is entirely made of a transparent material.

In this embodiment, the light emitted by the irradiation device 52 located in the first conveying shaft 51 can be emitted through the light-transmitting region 513, thereby ensuring that the separator 12 can be irradiated by the irradiation device 52.

In an embodiment of the present application, the first half shaft 511 and the second half shaft 512 are provided with snap-fit structures 514, and the first half shaft 511 and the second half shaft 512 are snap-fitted by means of the snap-fit structures 514.

For example, an inner wall of the first half shaft 511 is provided with a slot 514a, an inner wall of the second half shaft 512 is provided with a catch 514b corresponding to the slot 514a, and the snap-fitting of the first half shaft 511 and the second half shaft 512 is implemented by means of the snap-fitting of the slot 514a and the catch 514b.

In this embodiment, the connection between the first half shaft 511 and the second half shaft 512 is achieved by means of the built-in snap-fit structures 514 while the conveying of the electrode plate 11 by the first conveying shaft 51 is not affected.

Optionally, the first half shaft 511 and the second half shaft 512 are connected by means of a hinge joint, adhesion, bolt connection, etc.

In an embodiment of the present application, a shaft wall of the first half shaft 5111 and/or the second half shaft 512 has a thickness of 0.5 cm-18 cm. In this way, both the structural strength and the size of the first half shaft 511 and the second half shaft 512 can be taken into account.

When the first half shaft 511 and the second half shaft 512 are of hollow structures, the thickness d2 of the shaft wall is a maximum distance between an outer wall and the inner wall of the first half shaft 511 or the second half shaft 512. The outer wall is an outer surface of the first half shaft 511 or the second half shaft 512 in contact with the electrode plate 11, and the inner wall is an inner surface of the first half shaft 511 or the second half shaft 512, which is in contact with the irradiation device 52 or faces the irradiation device 52.

In an embodiment of the present application, the winding apparatus 50 further includes a control unit 53 and a distance measurement mechanism 54.

The distance measurement mechanism 54 is configured to measure a first length, and the first length is a length by which the electrode plate 11 passes through the first conveying shaft 51.

The distance measurement mechanism 54 may be arranged on the first conveying shaft 51, such that the length by which the electrode plate 11 is conveyed by the first conveying shaft 51 can be measured.

Optionally, the distance measurement mechanism 54 is arranged at a certain distance from the first conveying shaft 51, and the length by which the electrode plate 11 passes through the first conveying shaft 51 can be determined according to the data measured by the distance measurement mechanism 54.

Optionally, the distance measurement mechanism 54 may also sense the number of tabs, marks on the tabs, etc., and the distance measurement mechanism 54 may determine the position of the separator 12 according to the number of tabs.

The control unit 53 is configured to control the irradiation device 52 to be turned on or off according to the first length.

The separator 12 is arranged at a specific position of the electrode plate 11, and it can be determined according to the first length whether the separator 12 is conveyed to a corresponding position of the irradiation device 52.

For example, when the irradiation device 52 is arranged inside the first conveying shaft 51, the control unit 53 can determine, according to the first length, whether a portion of the electrode plate to which the separator 12 is attached has been conveyed to the first conveying shaft 51 or is about to be conveyed to the first conveying shaft 51, such that the control unit 53 controls the on/off of the irradiation device 52. If the portion of the electrode plate to which the separator 12 is attached has passed through the first conveying shaft 51, the control unit 53 may control the irradiation device 52 to be turned off.

For another example, when the irradiation device 52 and the first conveying shaft 51 are arranged at different positions, the control unit 53 may control the irradiation device 52 to be turned on or off according to the data measured by the distance measurement mechanism 54.

In this embodiment, by arranging the distance measurement mechanism 54 and the control unit 53, it is convenient to detect the separator 12 in a timely manner and irradiate the separator 12.

Optionally, the distance measurement mechanism 54 may be cylindrical, cubic, elliptical, etc.

In an embodiment of the present application, the winding apparatus 50 further includes a color sensing mechanism 55, and the color sensing mechanism 55 is configured to sense the color of the separator 12 or the electrode plate 11; and the control unit 53 is configured to control the irradiation device 52 to be turned on or off according to the color sensed by the color sensing mechanism 55.

The separator 12 and the electrode plate 11 may have different colors, and when the color sensing mechanism 55 senses the color of the separator 12, the control unit 53 may control the irradiation device 52 to be turned on. In this way, by arranging the color sensing mechanism 55 and the distance measurement mechanism 54, the accuracy of sensing the separator 12 can be further improved, so as to control the irradiation device 52 to be turned on in a timely manner.

When the color sensing mechanism 55 senses the color of the electrode plate 11, the control unit 53 can control the irradiation device 52 to be turned off.

In an embodiment of the present application, the control unit 53, the color sensing mechanism 55 and the distance measurement mechanism 54 are arranged in the irradiation device 52. The irradiation device 52 may also be an intelligent irradiation device with distance and color sensing functions. In this way, the space occupied by the winding apparatus 50 can be saved on, and the irradiation device 52 can also be convenient to prepare.

Optionally, the irradiation device 52 is an ultraviolet self-adaptive timer lamp, which can be automatically turned on or off according to a preset time interval.

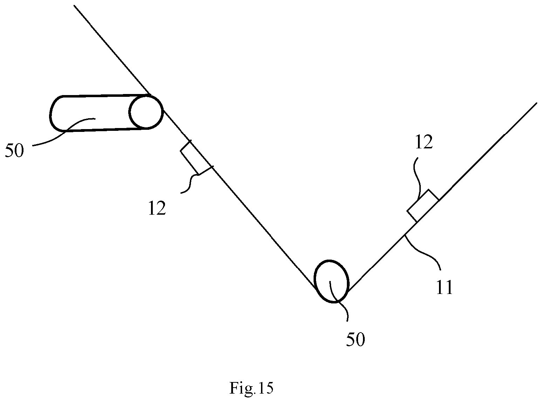

FIG. 15 is a schematic diagram of a winding apparatus in use according to an embodiment of the present application. In an embodiment of the present application, as shown in FIG. 15, the separator 12 is attached to the surface of the positive electrode plate 111, and the first conveying shaft 51 is configured to convey the positive electrode plate 111.

As shown in FIG. 15, the winding apparatus 50 is an apparatus in which the first conveying shaft 51 and the irradiation device 52 are integrated. The winding apparatus 50 is configured to convey the positive electrode plate 111, the separators 12 are attached to two surfaces of the positive electrode plate 111, and the separators 12 on the two surfaces of the positive electrode plate 111 can be irradiated by means of two winding apparatuses 50.

Optionally, after the separators 12 attached to the positive electrode plate 111 are irradiated by using the winding apparatuses 50, the positive electrode plate 111 attached with the separators 12, the separation film 113 and the negative electrode plate 112 are wound and reshaped by a winding needle, thereby forming the wound electrode assembly 10. Optionally, in the formed wound electrode assembly 10, the separators 12 are located in the bent region 11b of the electrode plate 11.

In this embodiment, after the positive electrode plate 111, the separation film 113 and the negative electrode plate 112 are wound to form the electrode assembly 10, the lithium precipitation can be avoided or reduced by arranging the separators 12.

In an embodiment of the present application, the separator 12 includes a base 121 and a time-delay adhesive 122 applied to the base 121, wherein the time-delay adhesive 122 is located between the base 121 and the electrode plate 11, and the time-delay adhesive 122 loses the viscosity within the preset time after being irradiated by the irradiation device 52, such that the separator 12 loses the viscosity between the separator and the electrode plate 11 within the preset time. In this way, the separator 12 can lose the viscosity within the preset time by using the time-delay adhesive 122 and the corresponding irradiation device 52, which is easy to implement.

In an embodiment of the present application, the irradiation device 52 is an ultraviolet lamp irradiation device or an infrared lamp irradiation device. For example, a lamp tube 56 is arranged in the irradiation device, and the lamp tube may be an ultraviolet lamp tube or an infrared lamp tube; and the irradiation device 52 can emit ultraviolet light by means of the ultraviolet lamp tube, and emit infrared light by means of the infrared lamp tube.

In this embodiment, the irradiation device 52 is an ultraviolet lamp irradiation device or an infrared lamp irradiation device, so the irradiation device 52 is easily obtained.

In an embodiment of the present application, the first conveying shaft 51 has a diameter d3 of 1.5 cm-20 cm. For example, the diameter of the first conveying shaft 51 may be 1.5 cm, 2 cm, 3 cm, 5 cm, 10 cm, 15 cm, 20 cm, etc. In this way, the first conveying shaft 51 is convenient to machine, and meanwhile, it is also convenient to arrange the first conveying shaft 51 according to the size of the electrode plate 11, such that the first conveying shaft 51 can conveniently convey the electrode plate 11.

In an embodiment of the present application, the separator 12 has a thickness d1 of 3 µm-2 cm. In this way, both the performance of the separator 12 and the size of the electrode assembly 10 can be taken into account.

The present application provides a winding apparatus 50, including a first conveying shaft 51 and an irradiation device 52. The first conveying shaft 51 is configured to convey the electrode plate 11, and the electrode plate 11 is attached with the separator 12. The irradiation device 52 is configured to irradiate the separator 12 attached to the electrode plate 11, such that the separator 12 loses the viscosity between the separator and the electrode plate 11 within a preset time. The wound electrode assembly 10 can be prepared by means of the winding apparatus 50, and the electrode assembly 10 includes an electrode plate 11 and a separator 12. The separator 12 is attached to the electrode plate 11 and located in the bent region 11b of the electrode plate 11, such that the phenomenon can be avoided or reduced that deintercalated ions of the positive electrode plate 111 are intercalated into the negative electrode plate 112 through the separator, thereby avoiding various phenomena such as the lithium precipitation caused by the lack of vacancies in the negative electrode plate 112. The separator 12 loses the viscosity between the separator and the electrode plate 11 within the preset time, thereby avoiding wrinkling of the electrode plate 11 during subsequent reshaping and other processes due to the viscosity between the separator 12 and the electrode plate 11. Therefore, the performance of the battery can be improved with the technical solution of the present application.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A wound electrode assembly (10), comprising:
an electrode plate (11); and
a separator (12), the separator (12) being attached to a bent region (11b) of the electrode plate (11), and the separator (12) losing viscosity between the separator and the electrode plate (11) within a preset time.

2. The electrode assembly (10) according to claim 1, wherein the bent region (11b) of the electrode plate (11) comprises a first surface (1111) and a second surface (1112) that are oppositely arranged, and the separator (12) is attached to the first surface (1111) and/or the second surface (1112) of the bent region (11b) of the electrode plate (11).

3. The electrode assembly (10) according to claim 2, wherein the electrode plate (11) comprises a positive electrode plate (111), and the separator (12) is attached to the first surface (1111) and/or the second surface (1112) of the bent region (11b) of the positive electrode plate (111).

4. The electrode assembly (10) according to any one of claims 1-3, wherein the electrode assembly (10) comprises N turns of positive electrode plate (111), and the separator (12) is arranged at the bent region (11b) of 1 to 5 turns of the positive electrode plate (111) close to the center of the electrode assembly (10), where N ≥ 5.

5. The electrode assembly (10) according to any one of claims 1-4, wherein the electrode assembly (10) further comprises a separation film (13), and the separation film (13) is located between the positive electrode plate (111) and the negative electrode plate (112) to isolate the positive electrode plate (111) from the negative electrode plate (112); and
the separator (12) is connected to the separation film (13).

6. The electrode assembly (10) according to any one of claims 3-5, wherein the separator (12) is configured to prevent ions deintercalated from the positive electrode plate (111) from passing through the separator (12).

7. The electrode assembly (10) according to any one of claims 1-6, wherein the separator (12) loses the viscosity within the preset time after being irradiated with light of a preset wavelength band.

8. The electrode assembly (10) according to any one of claims 1-7, wherein the separator (12) comprises a base (121) and a time-delay adhesive (122) applied to the base (121), the time-delay adhesive (122) is located between the base (121) and the electrode plate (11), and the time-delay adhesive (122) loses the viscosity within the preset time after being irradiated with the light of a preset wavelength band, such that the separator (12) loses the viscosity between the separator and the electrode plate (11) within the preset time.

9. The electrode assembly (10) according to claim 8, wherein a material of the base (121) is at least one of a fiber, a polymer, polypropylene, polyethylene, rubber, and a non-woven fabric.

10. The electrode assembly (10) according to claim 8 or 9, wherein the time-delay adhesive (122) is an ultraviolet time-delay adhesive (122) or an infrared time-delay adhesive (122).

11. The electrode assembly (10) according to any one of claims 1-10, wherein the separator (12) has a thickness (d1) of 3 µm-2 cm.

12. A battery cell (20), comprising:
an electrode assembly (10) according to any one of claims 1-11; and
a housing (21), the housing (21) being configured to accommodate the electrode assembly (10).

13. A battery (1), comprising:
a battery cell (20) according to claim 12; and
a case (11) for accommodating the battery cell (20).

14. A power consuming device (30), comprising:
a battery (1) according to claim 13, the battery (1) being configured to supply power to the power consuming device (30).

15. A winding apparatus (50), which is used for preparing a wound electrode assembly (10), the winding apparatus (50) comprising:
a first conveying shaft (51), the first conveying shaft (51) being configured to convey an electrode plate (11), and a separator (12) being attached to the electrode plate (11); and
an irradiation device (52), the irradiation device (52) being configured to irradiate the separator (12) attached to the electrode plate (11), such that the separator (12) loses viscosity between the separator and the electrode plate (11) within a preset time.

16. The winding apparatus (50) according to claim 15, wherein the irradiation device (52) is arranged inside the first conveying shaft (51), and is configured to irradiate the separator (12) when the first conveying shaft (51) conveys the electrode plate (11).

17. The winding apparatus (50) according to claim 15 or 16, wherein the first conveying shaft (51) comprises:
a first half shaft (511), the irradiation device (52) being arranged inside the first half shaft (511); and
a second half shaft (512), the second half shaft (512) being connected to the first half shaft (511), the second half shaft (512) being provided with a light-transmitting region (513), and the light-transmitting region (513) being arranged corresponding to the irradiation device (52), such that light from the irradiation device (52) is emitted through the light-transmitting region (513).

18. The winding apparatus (50) according to claim 17, wherein the first half shaft (511) and the second half shaft (512) are provided with snap-fit structures (514), and the first half shaft (511) and the second half shaft (512) are snap-fitted by means of the snap-fit structures (514).

19. The winding apparatus (50) according to claim 17 or 18, wherein a shaft wall of the first half shaft (511) and/or the second half shaft (512) has a thickness (d2) of 0.5 cm-18 cm.

20. The winding apparatus (50) according to any one of claims 15-19, wherein the winding apparatus (50) further comprises a control unit (53) and a distance measurement mechanism (54);
the distance measurement mechanism (54) is configured to measure a first length, and the first length is a length by which the electrode plate (11) passes through the first conveying shaft (51); and
the control unit (53) is configured to control the irradiation device (52) to be turned on or off according to the first length.

21. The winding apparatus (50) according to claim 20, wherein the winding apparatus (50) further comprises a color sensing mechanism (55), the color sensing mechanism (55) being configured to sense the color of the separator (12) or the electrode plate (11); and
the control unit (53) is configured to control the irradiation device (52) to be turned on or off according to the color sensed by the color sensing mechanism (55).

22. The winding apparatus (50) according to claim 21, wherein the control unit (53), the color sensing mechanism (55) and the distance measurement mechanism (54) are arranged in the irradiation device (52).

23. The winding apparatus (50) according to any one of claims 15-22, wherein the separator (12) is attached to a surface of a positive electrode plate (111), and the first conveying shaft (51) is configured to convey the positive electrode plate (111).

24. The winding apparatus (50) according to any one of claims 15-23, wherein the separator (12) comprises a base (121) and a time-delay adhesive (122) applied to the base (121), the time-delay adhesive (122) is located between the base (121) and the electrode plate (11), and the time-delay adhesive (122) loses the viscosity within the preset time after being irradiated by the irradiation device (52), such that the separator (12) loses the viscosity between the separator and the electrode plate (11) within the preset time.

25. The winding apparatus (50) according to any one of claims 15-24, wherein the irradiation device (52) is an ultraviolet lamp irradiation device or an infrared lamp irradiation device.

26. The winding apparatus (50) according to any one of claims 15-25, wherein the first conveying shaft (51) has a diameter (d3) of 1.5 cm-20 cm.

27. The winding apparatus (50) according to any one of claims 15-26, wherein the separator (12) has a thickness (d1) of 3 µm-2 cm.
